# EUROPÄISCHE PATENTSCHRIFT

(11) **EP 2 842 811 B1**
(45) Veröffentlichungstag und Bekanntmachung des Hinweises auf die Patenterteilung: **07.10.2015**
(21) Anmeldenummer: 13182275.1
(22) Anmeldetag: 29.08.2013
(51) Int. Cl.: B60R 15/04, E03D 5/10

(54) **Verfahren zur Spülung einer Toilette eines Fahrzeugs und Toilette**
Method for flushing a toilet of a vehicle and toilet
Procédé de rinçage de toilettes d'un véhicule et toilettes

(43) Veröffentlichungstag der Anmeldung: 04.03.2015
(73) Patentinhaber: Dometic GmbH, 57074 Siegen (DE)
(72) Erfinder: Oxenfarth, Jens, 58256 Ennepetal (DE); Jochim, Tim, 57234 Wilnsdorf (DE); Müller, Volker, 57271 Hilchenbach (DE)
(74) Vertreter: Grosse, Felix Christopher

(56) Entgegenhaltungen:
- EP-A2- 0 248 460
- DE-A1- 4 415 832
- DE-U1-202007 002 270

## Beschreibung

Die vorliegende Erfindung betrifft ein Verfahren zur Spülung einer Toilette eines Fahrzeugs, insbesondere einer Toilette eines Freizeitmobils, beispielsweise für Caravans, Busse, aber auch Wasserfahrzeuge wie Boote oder Yachten, mit einer Toilettenschüssel, einem Durchleitteil zur Ableitung von Abwasser in einen Fäkalientank und einer Steuereinheit zur Ansteuerung einer Spülung mit einem Steuerprogramm. Ferner betrifft die vorliegende Erfindung ein Toilettensystem mit einer Toilettenschüssel mit einem verschließbaren Durchleitteil und wenigstens einer Steuereinheit sowie ein Fahrzeug mit einem derartigen Toilettensystem und ein Computerprogrammprodukt zur Ausführung der Schritte des erfindungsgemäßen Verfahrens.

Bekannte Toiletten, die in Freizeitmobilen Verwendung finden, bestehen aus einem Oberteil und einem Unterteil. Das Oberteil umfasst einen Sitz und eine Toilettenschüssel, während sich im Unterteil der Fäkalientank befindet, der mit der Toilettenschüssel des Oberteils verbunden werden kann. Aus dem Stand der Technik sind insbesondere Kassettentoiletten für den Gebrauch in Freizeitmobilen bekannt, die einen von der Toilette entfernbaren und damit einfach wechselbaren Fäkalientank aufweisen. Derartige Toiletten sind aus der EP 2 484 560 A1 und der EP 2 572 490 A1 bekannt. Der Fäkalientank ist dabei in Form einer Kassette ausgebildet und dient als Sammeltank für das Abwasser. Der Fäkalientank kann sowohl Flüssigkeiten als auch Feststoffe aufnehmen. Bei den bekannten Kassettentoiletten ist die Toilettenschüssel über ein Trägerteil in einem Fahrzeug fest installierbar. Der Fäkalientank befindet sich unter der Toilettenschüssel in einem Kassettenschacht. Der Kassettenschacht ist in der Regel von außen über eine Klappe in der Außenwand des Fahrzeuges zugänglich ist. Auf diese Weise kann der Fäkalientank einfach in den Kassettenschacht eingeschoben bzw. aus diesem herausgezogen werden.

Die DE4415832 A1 beschreibt ein Verfahren zur elektrische Steuerung der Spülfunktion einer Toilette, wobei der Schliessschieber geöffnet wird. Nach dem Loslassen des Spülschalters wird noch für einige Sekunden eine Wasserspülung ergehen. Nach dieser Zeit wird die Pumpe abgeschaltet und der Schliessschieber geschlossen. Weiter gibt es einen Füllstandsgeber für den Fäkalienbehälter und eine Meldeleuchte für den Fahrer, wobei der Füllstandsgeber anzeigt, wann ein erfordertiches Entleeren des Fäkalienbehälters notwendig ist.

Die aus dem Stand der Technik bekannten Toiletten erfüllen Ihre Aufgabe bei in den Kassettenschacht eingeschobenem Fäkalientank zufriedenstellend. Ein wesentlicher Nachteil ergibt sich jedoch, wenn der Fäkalientank, beispielsweise zur Entleerung, Säuberung oder Wartung aus dem Kassettenschacht entfernt wird. Erfolgt in diesem Fall die Nutzung der Toilette, beispielsweise in einer Notsituation oder aus Unwissenheit oder Unachtsamkeit, fallen die Exkremente bzw. Flüssigkeiten durch den Auslass der Toilettenschüssel und den Durchleitteil in den Kassettenschacht bzw.in das Fahrzeug. Dies ist in höchstem Maße unerwünscht und unhygienisch und die damit einhergehende Verunreinigung macht eine aufwendige Reinigung wenigstens des Kassettenschachts notwendig. Die Folgen sind umso verehrender, wenn darüber hinaus der Fäkalientank in einer sol-chen Situation versehentlich wieder in den kontaminierten Kassettenschacht eingeführt wird, Gelangt zudem Flüssigkeit in schwer zugängliche Bereiche des Fahrzeuges, können diese unwiderruflich verunreinigt oder sogar beschädigt werden.

Ferner gibt es eine Anzahl von Vorschlägen zu Toilettenspülsystemen, die mittels einer Steuereinheit eine Standardspülung auslösen können. Bei einer sogenannten Standardspülung wird in der Regel die Spülung durch einen Nutzer manuell über eine geeignete Betätigungsvorrichtung ausgelöst und Wasser oder Spülflüssigkeit zum Spülen in die Toilettenschüssel eingeleitet. Die kontaminierte Spülflüssigkeit wird im Weiteren über den Abfluss in den Fäkalientank abgeleitet.

Die Verwendung von derartigen Toilettenspülsystemen ist bis zur maximalen Aufnahmekapazität des Fäkalientanks möglich. Bei Erreichen der maximalen Aufnahmekapazität des Fäkalientanks kann der Fäkalientank bei einem weiteren Spülvorgang überlaufen, wobei sich das Abwasser im Bereich oberhalb des Einlasses des Fäkalientanks zwischen Toilettenschüssel und Fäkalientank ansammelt und dann in den Kassettenschacht oder das Fahrzeuginnere läuft. Dies hat bei Ausziehen des Fäkalienstanks zur Folge, dass das überschüssige Abwasser unkontrolliert in den Kassettenschacht bzw. in das Fahrzeug gelangt. Derartige Verunreinigungen müssen aus oben genannten Gründen vermieden werden.

Daher ist es Aufgabe der Erfindung den unkontrollierten Ablauf von Abwasser, insbesondere Spülflüssigkeit oder Feststoffen, in den leeren Kassettenschacht bzw. das Fahrzeug zu verhindern.

Ferner ist es Aufgabe ein Toilettensystem mit einer Toilettenspülung vorzuschlagen, das auch bei aus dem Kassettenschacht entferntem Fäkalientank eine hygienische Nutzung der Toilette zumindest für die Notdurft ermöglicht und welches Verwendung in einem Fahrzeug der oben beschrieben Art finden kann.

Die Aufgabe wird mit dem Verfahren und einer Vorrichtung gemäß den Ansprüchen 1 und 12 gelöst. Vorteilhafte Weiterbildungen sind in den Unteransprüchen beschrieben. Ferner wird ein Computerprogrammprodukt gemäß Anspruch 16 zur Ausführung des erfindungsgemäßen Verfahrens bereitgestellt. Die Verwendung eines erfindungsgemäßen Toilettensystems in einem Fahrzeug geht aus Anspruch 17 hervor.

Es wird ein erfindungsgemäßes Verfahren zur Spülung einer Toilette, insbesondere einer Toilette eines Freizeitmobils bereitgestellt. Unter Freizeitmobil sind im Rahmen der Erfindung Caravans, ein Reisebusse, aber auch ein Wasserfahrzeuge wie Boote oder Yachten zu verstehen, Die Toilette weist eine Toilettenschüssel, eine Steuereinheit zur Ansteuerung einer Spülung mit einem Steuerprogramm und ein Durchleitteil zum Ableiten des Abwassers aus der Toilettenschüssel in einen Fäkalientank auf. Erfindungsgemäß werden folgende Verfahrensschritte ausgeführt:
- Schließen des Durchleitteiles mittels eines Durchleitteilverschlusses,
- Bereitstellen einer Notspülfunktion durch das Steuerprogramm und
- Ausführen einer Notspülung im Rahmen der Notspülfunktion bei einer Spülauslösung.

Mittels eines Durchleitteilverschlusses kann das vorzugsweise rohrförmige Durchleitteil von einer geöffneten Stellung für den Standardbetrieb in eine Schließstellung, bei welcher die Notspülfunktion bereitgestellt wird, überführt werden. Der Durchleitteilverschluss ist vorzugsweise als Verschlussschieber, Absperrventil, Klappe oder Kugelverschluss ausgeführt, wobei der Durchleitteilverschluss zum Öffnen bzw. Schließen mit einem geeigneten Griff manuell betätigt werden kann. Alternativ kann der Durchleitteilverschluss auch elektrisch geschlossen bzw. geöffnet werden.

In der Schließstellung des Durchleitteilverschlusses verhindert dieser, dass Feststoffe, Flüssigkeiten oder andere in die Toilettenschüssel eingebrachte Teile unkontrolliert das Durchleitteil verlassen und beispielsweise in den Kassettenschacht gelangen. Dadurch wird Verunreinigungen und Beschädigungen vorgebeugt. Durch Schließen des Durchleitteiles mit dem Durchleitteilverschlusses wird zudem das Einführen von Körperteilen oder sonstigen Gegenständen in den Durchleitteil bzw. den Kassettenschacht verhindert und damit einhergehenden Verletzungen oder Beschädigungen verhindert..

Erfindungsgemäß ermöglicht das Schließen des Durchleitteilverschlusses und die damit entstandene Auffangfläche die Verrichtung zumindest der Notdurft, auch bei entnommenem Fäkalientank. Auch die versehentliche Verwendung der Toilette bei entnommenem Fäkalientank bleibt ohne die oben beschriebenen negativen Folgen.

Für diesen Fall wird neben den mechanischen Bauteilen, insbesondere des Durchleitteilverschlusses, wenigstens eine elektronische Komponente in Form einer programmierbaren Steuereinheit zur Durchführung einer Notspülfunktion bereitgestellt. Die programmierte Notspülung gewährleistet, dass oberhalb des Durchleitteilverschluss gesammelter Abfall wie Papier, Exkremente, Urin oder dergleichen durch ein Notspülintervall mit dabei abgegebener Spülflüssigkeit bedeckt bzw. verdünnt werden. Hierzu ist vorzugsweise eine Mindestdauer der Notspülung im Steuerprogram hinterlegt. Auf diese Weise können Verschmutzungen der Toilette sowie Gerüche der auf dem Durchleitteilverschluss befindlichen Stoffe minimiert und die spätere Reinigung vereinfacht werden.

Mittels der Kombination von mechanischen und elektronischen Komponenten kann trotz eines entfernten oder bereits vollständig gefüllten Fäkalientanks noch eine Notspülung ausgeführt werden.

Auf diese Weise kann auch in dieser Situation die Notdurft, mindestens jedoch noch ein letzter Toilettengang ermöglicht werden. Dabei werden Fäkalien zusammen mit Flüssigkeiten aufgefangen und mittels einer vordefinierten Menge Spülflüssigkeit geruchsmindernd verdünnt bzw. abgedeckt. Auf diese Weise kann die hygienische Situation für die Zwischenlagerung verbessert werden, bevor der Fäkalientank wieder in den Kassettenschacht eingeführt und zur normalen Verwendung der Toilette zur Verfügung steht.

Zweckmäßigerweise wird die Notspülung mittels einer Zeitsteuerung automatisch gestoppt. Dabei wird das in die Toilettenschüssel abgegebene Spülflüssigkeitsvolumen in Abhängigkeit vom maximalen Aufnahmevolumen der Toilettenschüssel begrenzt.

Die Zeitsteuerung verhindert durch Regelung des maximal zulässigen Spülwasservolumens, dass die Toilettenschüssel bei Schließstellung des Durchleitteilverschlusses überläuft und den Toilettenraum bzw. den Sanitärbereich im Fahrzeug verunreinigt. Die Notspülung wird dabei entsprechend einem in der Steuereinheit bzw. der Steuerelektronik hinterlegten Zeitintervall ausgeführt. Die maximale vorbestimmbare Zeitdauer ist abhängig von der maximalen Aufnahmefähigkeit der Toilettenschüssel bei verschlossenem Durchleitteilverschluss. Um eine Verunreinigung der Spülvorrichtung wie Spüldüse oder -öffnungen durch zu hochstehendes Abwasser in der Toilettenschüssel zu vermeiden, kann das Zeitintervall auf beispielsweise auf 6 Sekunden begrenzt werden. Auf diese Weise kann ein Herausspritzen bzw. Herauslaufen bei Fahrbewegungen des Fahrzeuges vermieden werden.

Mit Hilfe der Zeitsteuerung der Notspülfunktion, im Weiteren auch als der Auto-Stopfunktion bezeichnet, kann über die vorgenannten Vorteile hinaus zudem eine unsachgemäße Nutzung der Toilettenspülung vermieden werden. Eine unsachgemäße Nutzung kann durch Fehlfunktion wie z.B. zu große Feuchtigkeit oder Wassertropfen auf einem kapazitiven Bedienfeld, oder durch Nichtbeachtung des Spülergebnisses durch den Nutzer und eine Mehrzahl von hintereinander ausgelösten Spülvorgängen erfolgen.

Erfindungsgemäß wird daher nach Ausführung einer Notspülung die Spülung deaktiviert. Auf diese Weise wird nur ein singulärer Notspülvorgang zugelassen. Jede weitere Notspülung oder andere Spülungsart, wird verhindert, solange sich nicht der eine ausreichende Restaufnahmekapazität aufweisende Fäkalientank im Kassettenschacht befindet. Insbesondere wird auch eine Standardspülung mit im Vergleich zu Notspülung größerem Spülvolumen verhindert, um ein Überlaufen der Toilettenschüssel zu verhindern.

Zweckmäßigerweise ist das Schließen des Durchleitteilverschlusses mit dem Entfernen des Fäkalientanks gekoppelt. Ein Entfernen des Fäkalientanks aus dem Kassettenschacht ist damit erst nach Verschluss des Durchleitteils durch Bewegen des Durchleitteilverschlusses aus der geöffneten in die geschlossene Stellung möglich. Weiterhin ist ein Öffnen des Durchleitteilverschlusses durch Bewegen des Durchleitteilverschlusses aus der geschlossenen in die geöffnete Stellung erst nach Einführen des Fäkalientanks in den Kassettenschacht möglich. Durch diese Kopplung wird nach Bewegen des Durchleitteilverschlusses in die geschlossene Stellung automatisch der Fäkalientank zum Entfernen freigegeben. Im Umkehrschluss ist bei dieser Ausführungsform der Toilette nach Entfernen des Fäkalientanks automatisch der Durchleitteilverschluss in der Schließstellung verriegelt.

Eine bevorzugte Ausführungsform der Toilette weist einen Sperrmechanismus mit einem Verschlussriegel und einem Kassettenriegel am Fäkalientank auf. Zweckmäßigerweise weist der Sperrmechanismus einen mit dem Durchleitteilverschluss koppelbaren Verschlussmitnehmer und einen mit dem Fäkalientank koppelbaren Kassettenmitnehmer auf. Durch die Koppelbarkeit der Mitnehmer mit den zugeordneten Bauteilen ist es möglich eine Verschiebung eines Mitnehmers an den anderen unmittelbar zu übertragen. Zudem kann durch das Ausziehen des Fäkalientanks über den Kassettenmitnehmer und den Verschlussmitnehmer bewirkt werden, dass der Verschlussriegel den Durchleitteilverschluss gegen Öffnen sperrt.

Das Kopplungselement zwischen Verschlussmitnehmer und Kassettenmitnehmer kann vorzugsweise in Form eines Bowdenzuges, einer Stange eines Getriebes, eines Servomotors, einer Linear- oder Rotationsführung, eines Seilzuges, eines Kettenantriebes oder einem Hubmagneten ausgeführt sein. Grundsätzlich ist auch eine Automatisierung des Kopplungsvorgangs denkbar.

Durch das Betätigen des Sperrmechanismus wird der Durchleitteilverschluss in der Schließstellung verriegelt und gleichzeitig das Herausziehen des Fäkalientanks zugelassen. Der Fäkalientank kann dann aus dem Kassettenschacht entfernt werden. Wie beschrieben bewirkt der Sperrmechanismus sobald die Kassette aus dem Kassettenschacht entfernt ist, dass der Durchleitteilverschluss in der Schließstellung gesperrt ist. Somit wird in vorteilhafter Weise sichergestellt, das im ausgezogenen Zustand des Fäkalientanks, Flüssigkeiten oder Feststoffe nicht unkontrolliert in den Kassettenschacht gelangen können. Damit sind auch die Bedingungen zur Verrichtung der Notdurft bzw. mindestens eines letzten Toilettengangs mit Notspülung sichergestellt.

In einer vorteilhaften erfindungsgemäßen Weiterbildung weist das Verfahren zudem die folgenden Verfahrensschritte:
- Abfragen von wenigstens einer Zustandsgröße bezüglich des Fäkalientanks, insbesondere der Position des Fäkalientanks, und/oder bezüglich des Durchleitteilverschlusses, insbesondere der Position des Durchleitteilverschlusses;
- Bereitstellen der Notspülfunktion durch das Steuerprogramm in Abhängigkeit von der wenigstens einen Zustandsgröße; und
- Ausführen der Notspülung (106), einer Standardspülung (107) oder keiner Spülung (108) in Abhängigkeit von der wenigstens einen Zustandsgröße.

Auf Grundlage von Messergebnissen basierend auf den ermittelten Zustandsgrößen kann mit geeigneten Sensoren eine sensorgestützte Ansteuerung der Notspülung bereitgestellt werden. In Abhängigkeit von der bzw. den erfassten Zustandsgrößen und Sensorsignalen kann der Normalbetrieb der Toilette mit einer Standardspülmenge oder eine einmalige Notspülung mit vergleichsweise geringem Spülvolumen freigegeben werden. Gegebenenfalls wird auch eine Spülung insgesamt unterbunden.

In einer weiteren vorteilhaften erfindungsgemäßen Weiterbildung weist das Verfahren zudem die folgenden Verfahrensschritte auf:
- Erfassen der Zustandsgröße "Fäkalientankposition" mittels eines Sensors;
- Verarbeiten der Zustandsgröße "Fäkalientankposition" durch die Steuereinheit; und
- Freigabe einer Notspülung in Abhängigkeit der Zustandsgröße "Fäkalientankposition".

Über die Positionsabfrage, die durch einen Sensor, insbesondere durch einen Mikro-Schalter am Rahmen der Toilette, ausgeführt wird, kann erfasst werden, ob sich ein Fäkalientank in dem Kassettenschacht der Toilette befindet. Wurde der Fäkalientank zum Entleeren, zur Reinigung oder zum Austausch entfernt, gibt der Sensor bzw. der Mikro-Schalter das Signal "Fäkalientank im ausgezogenen Zustand" über eine geeignete Kommunikationsschnittstelle der Elektronik an die Steuereinheit weiter. Über die in der Steuereinheit hinterlegte Notspülfunktion kann die Toilette noch einmal gespült und mit Spülflüssigkeit versorgt werden. Dies hat den Vorteil, dass für die Verrichtung der Notdurft bzw. für einen letzten Toilettengang eine Notspülung zur Verfügung gestellt wird, selbst für den Fall, wenn der Fäkalientank aus dem Kassettenschacht entfernt wurde.

Mit dem erfindungsgemäßen Verfahren wird somit eine letzte Notspülung zugelassen, deren vorgebbare Spülflüssigkeitsmenge eine hygienisch verbesserte Zwischenlagerung auf dem geschlossenen Durchleitteilverschluss und eine sich anschließende leichte Entfernung der Notdurft bzw. des Abwassers aus der Toilettenschüssel und Reinigung der Toilettenschüssel bei wieder eingeführtem Fäkalientank ermöglicht.

In einer weiteren vorteilhaften erfindungsgemäßen Weiterbildung weist das Verfahren zudem die folgenden Verfahrensschritte auf:
- Erfassen der Zustandsgröße "Füllstandshöhe im Fäkalientank" mittels eines Sensors;
- Verarbeiten der Zustandsgröße "Füllstandshöhe im Fäkalientank" durch die Steuereinheit; und
- Freigabe einer Notspülung in Abhängigkeit von der Zustandsgröße "Füllstandshöhe im Fäkalientank".

Über einen Füllstandssensor im Fäkalientank wird das Signal "Fäkalientank hat maximale Füllhöhe erreicht" an die Steuereinheit gesendet. Die Steuereinheit ist derart programmiert, dass sie einen letzten Spülvorgang zulässt obwohl der Fäkalientank voll ist. Auf diese Weise kann noch ein letzter Toilettengang erfolgen, wenn das Durchleitteil zuvor geschlossen wurde. Mit Hilfe einer Füllstandsmessung kann somit eine Notspülung freigegeben werden, wenn der Fäkalientank komplett gefüllt ist und sich noch im Kassettenschacht befindet. Durch die Zwischenlagerung einer Notspülmenge oberhalb des zuvor geschlossenen Durchleitteilverschlusses wird ein Überlaufen des Fäkalientanks in den Kassettenschacht oder ein unerwünschter Rückstau in das Durchleitteil verhindert.

Die Möglichkeit einer Notspülung, obwohl der Tank bereits gefüllt ist, ist besonders dann von Vorteil, wenn das Fahrzeug unterwegs ist und der Fäkalientank nicht entleert bzw. gereinigt werden kann. Dies ist beispielsweise der Fall, wenn es in der Nähe des Freizeitmobiles oder Fahrzeuges keine Entleerungs- oder Reinigungsstationen gibt. Der fluiddichte Durchleitteilverschluss verhindert dabei ein unkontrolliertes Ablaufen der auf dem Durchleitteilverschluss lagernden verdünnten Notdurft in den unteren Teil des Durchleitteiles. Sobald eine Entleerungsstation erreicht ist, kann der volle Fäkalientank aus dem Kassettenschacht ohne Verunreinigungen entfernt und entleert werden.

In einer weiteren vorteilhaften erfindungsgemäßen Weiterbildung weist das Verfahren zudem die folgenden Verfahrensschritte auf:
- Erfassen der Zustandsgröße "Position des Durchleitteilverschlusses" mittels eines Sensors;
- Verarbeiten der Zustandsgröße "Position des Durchleitteilverschlusses" durch die Steuereinheit; und
- Freigabe einer Notspülung in Abhängigkeit der Zustandsgröße "Position des Durchleitteilverschlusses".

Somit wird sichergestellt, dass das Verschließen des Durchleitteilverschlusses erfolgreich ausgeführt worden ist. Ein unvollständiger Verschluss tritt beispielsweise auf, wenn unbeabsichtigt Gegenstände eingeführt wurden, die das Schließen verhindern. Eine Sensorüberwachung ist zudem von Vorteil, wenn der Durchleitteilverschluss nicht automatisch in der Schließstellung verbleibt oder mechanisch verriegelbar ist. Somit kann auch überwacht werden, ob unterwegs durch Bewegungen des Fahrzeuges eine unbeabsichtigte Öffnung des Durchleitteilverschlusses erfolgt ist.

Die Abfrage der Schließstellung kann zweckmäßigerweise mit anderen Abfragen, insbesondere mit der Füllstandsabfrage, kombiniert werden. Dabei ist von Vorteil, dass nach Detektion eines vollen Fäkalientanks automatisch der Durchleitteilverschluss in die Schließstellung bewegt wird. Das erfolgreiche Schließen wird der Steuereinheit übermittelt und daraufhin die Notspülfunktion von der Steuereinheit freigegeben. Diese kann dann vom Nutzer einmalig ausgelöst werden.

Die Spülauslösung kann über einen Nutzer über eine geeignete Betätigungsvorrichtung wie beispielsweise ein kapazitives Bedienfeld erfolgen. Alternativ kann die Spülauslösung sensorgestützt über die direkte und/oder indirekte Erfassung eines Nutzers erfolgen. Zur Erfassung der Anwesenheit eines Nutzers können geeignete Bewegungssensoren verwendet werden, die beispielsweise auf Infrarotlicht- oder Radarsignalmessung beruhen. Darüber hinaus kann der Toilettengang auch indirekt erfasst werden, indem Änderungen physikalischer Paramater wie Temperatur, pH-Wert oder dergleichen erfasst werden. Beispielsweise kann ein Wärmesensor Temperaturänderung durch Urin erfassen und damit zeitversetzt eine Notspülung auslösen. Mittels Sensoren zur Widerstands-, Leitwerts- oder Füllstandserfassung in der Toilettenschüssel kann zusätzlich die erfolgreiche Ausführung der Notspülung überprüft werden. Beispielsweise zeigen Fluideigenschaftsänderungen eine erfolgreiche Verdünnung des Abwassers an. Alternativ kann ein Füllstandssensor in der Toilettenschüssel installiert sein, um eine vorbestimmte minimale- bzw. maximale Flüssigkeitshöhe in der Toilettenschüssel zu überprüfen.

In einer weiteren vorteilhaften erfindungsgemäßen Weiterbildung weist das Verfahren zudem die folgenden Verfahrensschritte auf:
- Einschieben des Fäkalientanks nach Ausführung der Notspülung;
- Öffnen des Durchleitteilverschlusses und Ablassen des Abwassers in den Fäkalientank; und
- Ausführen einer Standardspülung.

Durch Einführen des Fäkalientanks in den Kassettenschacht wird der Durchleitteilverschluss vorzugsweise mechanisch entriegelt, und der Durchleitteilverschluss kann in die geöffnete Stellung bewegt werden. Die Notdurft kann damit in den Fäkalientank abgelassen werden. Daraufhin wird mit Hilfe der Steuereinheit eine Standardspülung vorzugsweise automatisch ausgelöst, um mögliche Reste der Notdurft aus der Toilettenschüssel zu entfernen. Anschließend kann die Toilette wie gewohnt verwendet werden. Nach einer Reaktivierung der normalen Spülfunktion mittels der Steuereinheit kann ein Nutzer je nach Bedarf eine oder mehrere Standardspülungen auslösen.

Erfindungsgemäß wird zudem ein Toilettensystem für Fahrzeuge bereitgestellt. Das erfindungsgemäße Toilettensystem weist eine Toilette mit einer Toilettenschüssel, eine programmierbare Steuereinheit zur Ansteuerung einer Spülung mit einem Steuerprogramm, ein Spülventil zur Spülung der Toilettenschüssel mit Spülflüssigkeit und ein Durchleitteil zum Ableiten von Abwasser aus der Toilettenschüssel in einen Fäkalientank auf. Das Durchleitteil ist mittels eines Durchleitteilverschlusses verschließbar. Bei einer Spülauslösung ist eine Notspülung durch die Steuereinheit ansteuerbar.

Die Toilettenschüssel und das Durchleitteil sind vorzugsweise als einstückiges Bauteil ausgebildet. Alternativ kann das Durchleitteil an den Auslass der Toilettenschüssel, beispielsweise mittels eines Gewindes und entsprechenden Dichtungen, einfach und fluiddicht befestigt werden.

Mit Hilfe des erfindungsgemäßen Toilettensystems kann das erfindungsgemäße Verfahren zur Notspülung einer Toilettenschüssel ausgeführt werden. Auf diese Weise können Fäkalien oder Urin zusammen mit einer vorgebbaren Spülflüssigkeitsmenge oberhalb des Durchleitteilverschlusses hygienisch gelagert werden, bis ein entleerter Fäkalientank zur Aufnahme der Notdurft eingeschoben und diese in den Fäkalientank abgelassen wird.

Weiterbildend weist das Toilettensystem zur sensorgestützten Ansteuerung der Notspülung wenigstens einen Sensor auf, wobei der Sensor ausgewählt ist aus der Gruppe von Positionsdetektor, Füllstandssensor, Mikroschalter und Eigenschaftssensor.

Mittels Sensoren können Messdaten bezüglich des Fäkalientanks, des Durchleitteilverschlusses, der Fluideigenschaften und/oder -höhe in der Toilettenschüssel und Zustandsveränderungen durch den Nutzer an die Steuereinheit weitergegeben werden. Eigenschaftssensoren können Änderungen in physikalischen Parameter wie Strahlung, Wärme oder Leitfähigkeit messen und somit die erfolgte Nutzung der Toilette anzeigen. Auf Grundlage der Messdaten kann die Steuereinheit eine Notspülung freigeben.

Ferner ist es von Vorteil, wenn die Steuereinheit des Toilettensystems eine Speichereinheit zur Hinterlegung von wenigstens einem Spülprogramm umfasst. Auf diese Weise kann eine Steuerelektronik eine Mehrzahl von Steuerprogrammen hinterlegen, die je nach Bedarf des jeweiligen Nutzers bzw. Nutzer oder bezogen auf die Wasserversorgung angesteuert werden können. Die Steuereinheit kann in Form einer Steuerelektronik und als Teil eines Bordcomputers ausgeführt werden.

Zweckmäßigerweise weist die Steuereinheit eine Schnittstelle zur Programmierung und/oder zur Kommunikation mit Sensoren auf. Mit Hilfe einer Schnittstelle, die einen Daten- und Informationsaustausch ermöglicht, kann eine Programmierung auf einfache Weise ausgeführt werden. Beispielsweise kann es sich bei der Schnittstelle um eine serielle Schnittstelle wie eine USB-Schnittstelle handeln (Universal Serial Bus-Schnittstelle). Die Kommunikation mit einem oder mehreren Sensoren kann vorteilhaft drahtlos erfolgen.

Ferner wird ein Computerprogrammprodukt bereitgestellt, das in einer Speichereinheit der Steuereinheit ladbar ist, um einzelne oder alle Schritte des vorstehend beschriebenen Verfahrens auszuführen.

Ferner betrifft die Erfindung ein Fahrzeug, insbesondere Caravan, Bus, Freizeitmobil oder Wasserfahrzeug, mit einem erfindungsgemäßen Toilettensystem.

Nachfolgend wird die Erfindung anhand von in den Figuren gezeigten Ausführungsbeispielen und Verfahrensschritten näher erläutert. Hierbei zeigen:
- Fig. 1 und 2: eine schematische Seitenansicht und Querschnittsdarstellung mit Detailausschnitt einer Ausführungsform einer Toilette, wobei der Durchleitteilverschluss in der Schließstellung gezeigt ist;
- Fig. 3: die Toilette nach Fig. 1 nach dem Ausziehen des Fäkalientanks, wobei der Durchleitteilverschluss und der Einlass des Fäkalientanks in Schließstellung vergrößert gezeigt ist;
- Fig. 4: eine schematische Querschnittsdarstellung einer weiteren Ausführungsform der Toilette mit einer programmierbaren Steuereinheit nach Auslösung einer Notspülung
- Fig. 5: eine Toilette nach Fig. 4 mit eingeführtem Fäkalientank beim Öffnen des Durchleitteilverschlusses;
- Fig. 6: eine schematische Querschnittsdarstellung einer weiteren Ausführungsform der Toilette mit Sensoren; und
- Fig. 7: Fließdiagramm für ein erfindungsgemäßes Verfahren zur Notspülung einer Toilette.

In den Figuren werden gleiche Bezugszeichen für gleichartige Teile der verschiedenen Ausführungsformen verwendet.

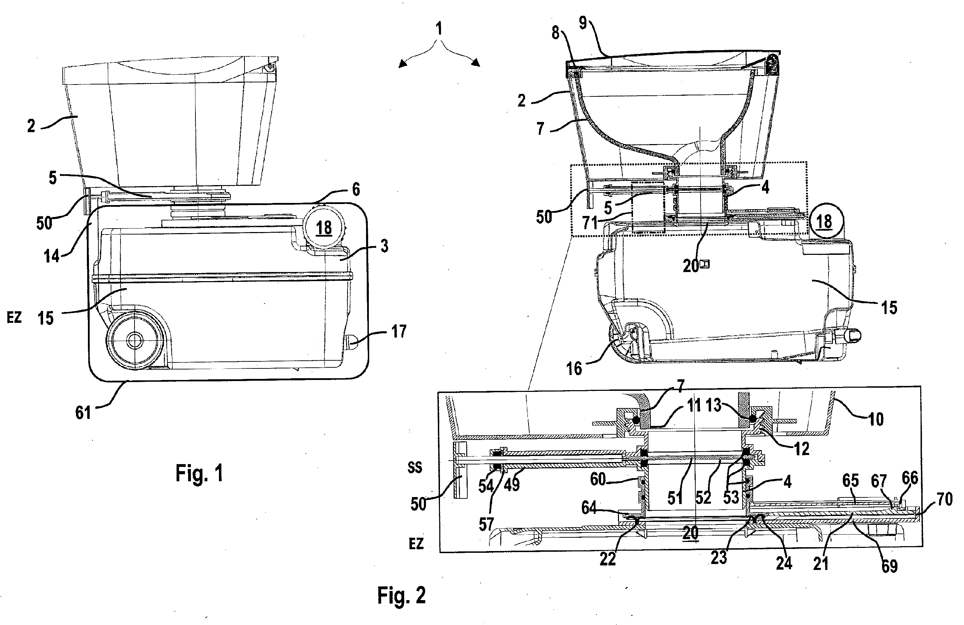

In den Fig. 1 bis 7 sind das erfindungsgemäße Verfahren 100 und Ausführungsformen der erfindungsgemäßen Toilette 1 für Fahrzeuge, insbesondere für Busse, Reisemobile, Caravans und Wasserfahrzeuge gezeigt. Die in den Fig. 1 bis 6 dargestellte Ausführungsformen der Toilette 1 weisen ein Oberteil 2 und ein Unterteil 3 auf. Das Oberteil 2 umfasst eine Toilettenschüssel 7 mit einer schwenkbaren Toilettenbrille 8 und einem Toilettendeckel 9. Das Unterteil 3 dient als Aufnahme und zur Befestigung des Oberteiles 2. Das Unterteil 3 kann über das Fußteil 61 an einem Fahrzeugboden befestigt werden. Ferner weist das Unterteil 3 Verstärkungen und an der Oberseite ein Trägerteil 6 auf, um das Oberteil bzw. das damit verbundene Durchleitteil 5 stützen zu können.

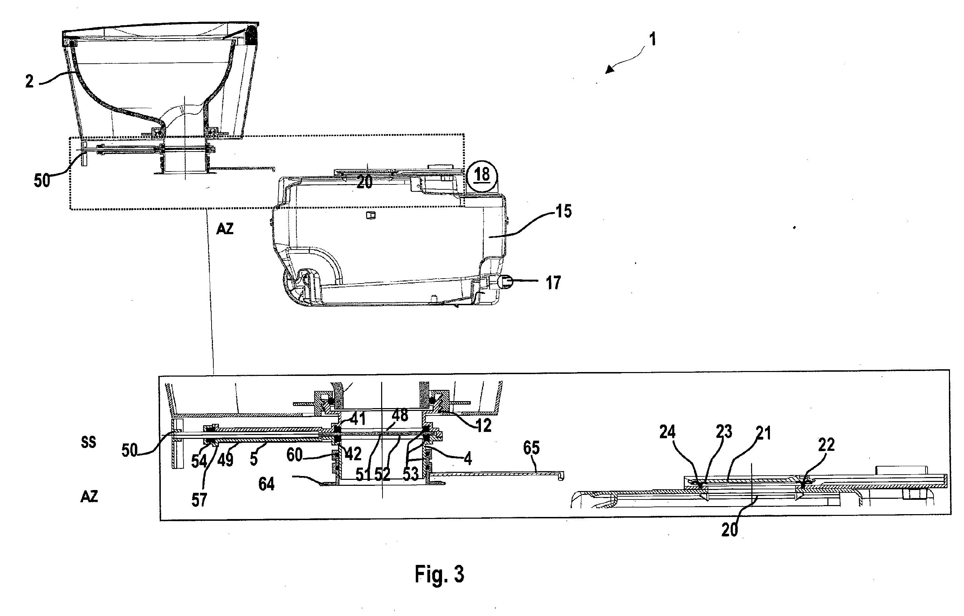

Das Unterteil 3 beinhaltet einen Kassettenschacht 14, in dem sich der Fäkalientank 15 in eingeführter Position befindet. Der Fäkalientank 15, auch als Kassette bezeichnet, kann sowohl Flüssigkeiten als auch Feststoffe aufnehmen. Das Fassungsvermögen des Fäkalientanks beträgt üblicherweise nicht mehr als 40 L, vorzugsweise ca. 20 L. Der Einlass 20 des Fäkalientanks 15 befindet sich unterhalb des Toilettenschüsselauslasses 11 und dem Unterteil 42 des Durchleitteiles 4, um abgeleitetes Abwasser aus der Toilettenschüssel 7 aufnehmen zu können. Bei der Verwendung in Wohnmobilen ist der Fäkalientank 15 in der Regel von außen über eine Klappe in der Außenwand des Fahrzeuges (nicht gezeigt) zugänglich. Mit Hilfe des Griffes 17 kann der Fäkalientank einfach aus dem Kassettenschacht von einem eingeschobenen Zustand EZ (Fig. 1 und 2) in den ausgezogenen Zustand AZ (siehe Fig. 3) bewegt werden. Um den Transport zu einer Entsorgungsstation zu erleichtern, weist der Fäkalientank 15 einen teleskopartig ausziehbaren Griff 17 und zwei Räder 16 auf. Die Entsorgung kann über einen schwenkbaren Entleerungsstutzen 18 einfach erfolgen.

Der Detailausschnitt der Fig. 2 zeigt insbesondere das untere Ende der Toilettenschüssel 7 mit dem Toilettenschüsselauslass 11 und das Durchleitteil 4. Das Durchleitteil 4 umfasst ein Durchleitteiloberteil 41 und ein Durchleitteilunterteil 42, die beide formschlüssig miteinander verbunden sind. Das Durchleitteiloberteil 41 weist an einem oberen Ende einen Gewinde 12 für eine Verbindung mit dem Toilettenschüsselauslass 11 auf. Über das Gewinde 12 ist das Oberteil 2 schwenkbar und höhenverstellbar gelagert. Für eine fluiddichte Verbindung zwischen dem Toilettenschüsselauslass 11 und dem Durchleitteiloberteil 41 ist eine Ringdichtung 13 vorgesehen. Weitere Ringdichtungen 53 sind zwischen dem Kassettenadapter 60 und dem Durchleitteilunterteil 42 angebracht. Mittels des Kassettenadapters 60 wird der Fäkalientank 15 im eingeschobenen Zustand EZ mit dem Durchleitteilunterteil 42 des Durchleitteiles 4 fluiddicht verbunden. Ist der Fäkalientank 15 in den Kassettenschacht 14 eingeschoben, dichtet die Kassettendichtung 22 den Übergang zum Durchleitteil 4 ab.

Ferner weist das Durchleitteil 4 einen Durchleitteilverschluss 5 auf. Der Durchleitteilverschluss 5 ist in Form eines Schieberschwertes 51 ausgebildet, das in der geöffneten Position in einem Schieberschwertgehäuse 49 gelagert wird. Für das Schieberschwert 51 ist eine Führung 48 zwischen dem Durchleitteiloberteil 41 und dem Durchleitteilunterteil 42 angeordnet. Über einen Schiebergriff 50 ist das Schieberschwert 51 vom Schieberschwertgehäuse 49 entlang der Führung 48 in die Schließstellung SS verlagerbar. Das Schieberschwert 51 ist am Durchleitteiloberteil 41 bzw. am Durchleitteilunterteil 42 durch zwei Ringdichtungen 53 abgedichtet. An einem Ende 57 des Schieberschwertgehäuses 49 ist eine weitere Dichtung 58 vorgesehen, um das Schieberschwertgehäuse 49 gegen den Austritt von Flüssigkeiten und Feststoffen zu sichern.

Der Fäkalientank 15 weist an der Oberseite eine Einlassöffnung 20 zur Aufnahme von Abwasser mit bzw. ohne Feststoffe 19 auf. Die Einlassöffnung 20 des Fäkalientanks 15 ist durch eine horizontal verschiebbare Einlassabdeckung 21 verschließbar. An der Einlassöffnung 20 ist eine Dichtung 22 vorgesehen, die zwei bogenförmig nach innen und außen kragende Dichtlippen 23, 24 aufweist. Durch die Dichtung 22 ist die Einlassöffnung 20 bei aufliegender Einlassabdeckung 21 flüssigkeitsdicht und geruchsdicht verschlossen. Die Schließstellung der Einlassabdeckung 21, im Weiteren auch als Verschlussschieber bezeichnet, wird automatisch durch den Abdeckungsmitnehmer 65 an der Einlassabdeckung 21 beim Herausziehen des Fäkalientanks erreicht. Die Mitnehmerfunktion wird durch den Haltabschnitt 66 des Mitnehmers 65 in Kombination mit der Rastnase 67 der Einlassabdeckung 21 gewährleistet.

Die Toilette 1 stellt somit einen sogenannten Doppelverschluss bereit, der aus dem Durchleitteilverschluss 5 und der Einlassabdeckung 21 besteht. Durch einen mit dem Durchleitverschluss 5 und dem Fäkalientank 15 koppelbaren Sperrmechanismus 71 ist der Durchleitteilverschluss 5 sperrbar, so dass das Schieberschwert 51 im gesperrten Zustand nicht bewegbar ist. Beispielsweise ist der Durchleitteilverschluss nicht öffenbar, wenn sich die Kassette nicht im eingeschobenen Zustand EZ befindet. Damit ergibt sich im ausgezogenen Zustand AZ automatisch die Schließstellung SS des Durchleitteilverschlusses 5. Der Sperrmechanismus 71 zwischen dem Schieberschwert 51 und dem Fäkalientank 15 ist in der Fig. 3 durch ein strichpunktiertes Rechteck in Fig. 2 schematisch angedeutet.

Der nicht näher dargestellte Sperrmechanismus 71 umfasst beispielsweise einen mit dem Fäkalientank 15 über ein Kopplungselement koppelbaren Kassettenmitnehmer und einen mit dem Durchleitteilverschluss 5 koppelbaren Verschlussmitnehmer. Beide Mitnehmer sind im Trägerteil 6 bzw. Oberteil 2 der Toilette verschiebbar gelagert.

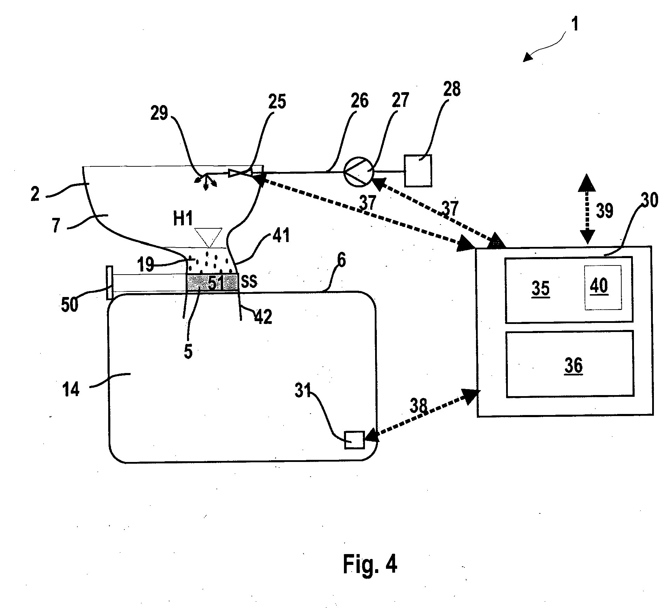

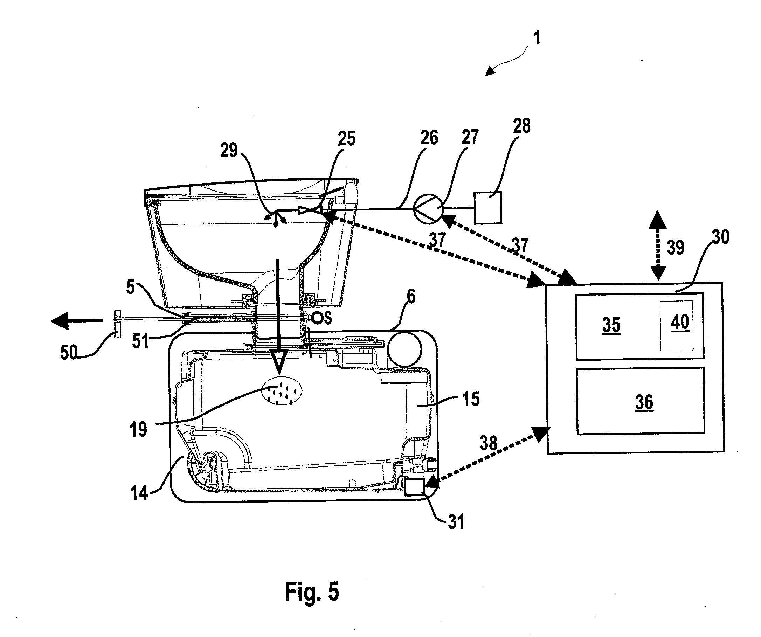

In den Fig. 4 und 5 werden die für einen programmierbaren Spülbetrieb einer Toilette 1 notwendigen mechanischen und elektronischen Bauteile schematisch gezeigt. Die Spülflüssigkeitszufuhr erfolgt über eine geeignete Spüldüse 29 im oberen Bereich der Toilettenschüssel 7. Die Spüldüse 29 wird über eine Leitung 26 mit Spülflüssigkeit aus einer Versorgungseinheit 28 versorgt. Die Versorgungseinheit 28 kann als Spülflüssigkeitstank oder als zentrale Wasserversorgung ausgebildet sein, an welche die Toilettenspülung angeschlossen ist. Zur besseren Geruchsunterdrückung können in der Versorgungseinheit 28 chemische Zusätze zugemischt werden. Von der Versorgungseinheit 28 wird die Spülflüssigkeit über die Pumpe 27 zum Spülventil 25 gefördert. Über die Öffnungsdauer des Spülventils 25, das beispielsweise als Magnetventil ausgebildet ist, kann die Flüssigkeitszufuhr in die Toilettenschüssel 7 zeitgesteuert geregelt werden.

Das durch eine Toilettennutzung und Spülung entstehende Abwasser 19 mit bzw. ohne Feststoffen wird von dem Durchleitteilverschluss 5 aufgefangen, sofern er sich wie in Fig. 4 dargestellt in der Schließstellung SS befindet.

Die Ansteuerung der Spüleinheiten erfolgt über die Steuereinheit 30. Die Steuereinheit 30 ist in dem Ausführungsbeispiel in Form einer Steuerelektronik ausgeführt. Die Steuereinheit 30 umfasst ein Bedienpanel 36 und einen Bordcomputer 35 mit Speichereinheit 40. Die Speichereinheit 40 kann über die externe Schnittstelle, dargestellt mit dem Doppelpfeil 39, Steuerprogramme erhalten. Über diese Schnittstelle 39 ist jede Art von Programm auf die Elektronik bzw. auf die Software des Bordcomputers 35 übertragbar und somit die erfindungsgemäße Notspülfunktion programmierbar.

Eine programmierte Notspülfunktion, die auf der Speichereinheit 40 hinterlegt wird, lässt die Toilette bei einer Spülauslösung noch einmal spülen. Diese Notspülung wird auch ausgeführt, wenn der Fäkalientank entfernt ist (AZ; vgl. Fig. 4). Die Ansteuerung der Notspülfunktion erfolgt über die Kommunikationsschnittstellen 37, indem die Pumpe 27 bzw. das Spülventil 25 angesteuert wird. Die Spülwassermenge und damit die Abwasserhöhe in der Toilettenschüssel 7 werden durch ein voreingestelltes und programmiertes Spülflüssigkeitsvolumen geregelt. Dabei läuft die Toilettenspülung nur gemäß einer vorgegebenen Zeit, die auf der Steuereinheit 30 bzw. Elektronik programmiert ist. Im dargestellten Beispiel ergibt sich eine Flüssigkeitshöhe H1 nach der ausgeführten Notspülung.

Durch die Notspülung bis zur Höhe H1 werden Feststoffe, insbesondere Fäkalien, für die Lagerung in der Toilettenschüssel mit Spülflüssigkeit bedeckt, so dass Verschmutzungen in der Toilettenschüssel weitestgehend verhindert und Gerüche minimiert werden. Je nach individuellen Nutzungsanforderungen wird die minimale Spülwasservolumenmenge bzw. die zu erreichende Flüssigkeitshöhe H1 bzw. Flüssigkeitsstand individuell angepasst. Hierzu werden in der Speichereinheit 40 des Bordcomputers 35 verschiedene Programmfunktionen angepasst an den Nutzer oder bezogen auf die Wasserversorgung programmiert. Die Auslösung einer Notspülung erfolgt über eine Betätigungsvorrichtung wie z.B. das Bedienpanel 36.

Zudem zeigt die Ausführungsform der Fig. 4 und Fig. 5 die Bereitstellung eines Sensors 31, der als Positionssensor ausgeführt ist. Der Sensor 31 detektiert, ob der Fäkalientank 15 in den Kassettenschacht 14 eingeführt ist. Auf Grundlage dieses Signales kann eine Notspülung ausgelöst werden. Zur Datenübertragung von Sensor 31 zur Steuereinheit 30 weist die Steuereinheit 30 eine Schnittstelle 38 auf. Im eingeschobenen Zustand des Fäkalientanks wird ein entsprechendes Signal "EZ" über die Kommunikationsschnittstelle 38 an die Steuerelektronik gesendet. Diese Kommunikation kann drahtlos oder drahtgebunden erfolgen. Detektiert der Sensor wie in Fig. 4 keinen Fäkalientank ist durch eine mechanische Kopplung auch automatisch die Schließstellung SS des Durchleitteilverschlusses gegeben. Anschließend kann eine Notspülung über die Schnittstellen 37 angesteuert werden.

Die Darstellung der Fig. 5 unterscheidet sich von derjenigen der Fig. 4 nur darin, dass die Positionen des Fäkalientanks sowie des Durchleitteilverschlusses verändert worden sind. Fig. 5 zeigt den eingeschobenen Zustand EZ eines leeren Fäkalientanks 15. Der Fäkalientank 15 wird derart in den Kassettenschacht eingeschoben, dass sich die Einlassöffnung 20 unterhalb des Durchleitteiles befindet und die Einlassabdeckung 21 des Fäkalientanks 15 über den Mitnehmer 65 in eine offene Stellung verschoben wird. Daraufhin wird der noch in Fig. 4 geschlossene Durchleitteilverschluss 5 entsperrt und kann in die offene Stellung OS bewegt werden, indem das Schieberschwert 51 an dem Griff 50 herausgezogen wird. Nach Öffnung des Durchleitteilverschlusses 5 gelangt die Notspülflüssigkeitsmenge zusammen mit Feststoffen und Abwasser 19 in den Fäkalientank 15 (in Fig. 5 schematisch mit dem nach unten gerichteten Pfeil dargestellt). Danach kann zur besseren Spülwirkung automatisch eine weitere Spülung mittels der Steuereinheit 30 angesteuert werden.

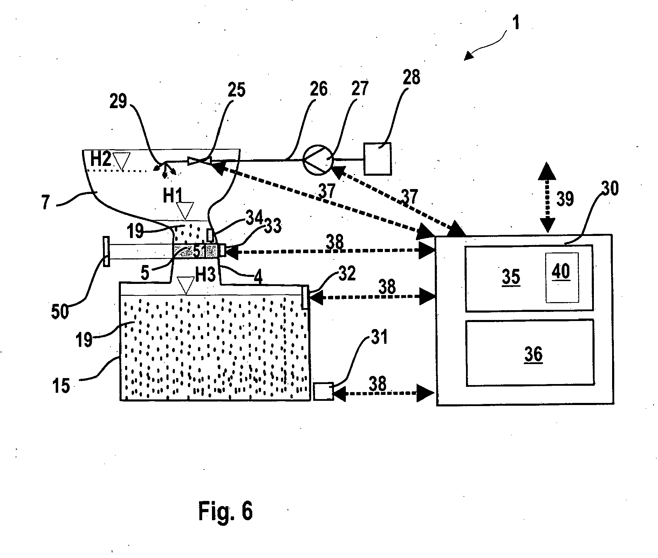

Eine weitere Ausführungsform der erfindungsgemäßen Toilette 1 ist in Fig. 6 gezeigt. Zusätzlich zu den der in Fig. 5 gezeigten Komponenten werden weitere Sensoren 32 bis 34 zur Messung von Zustandsgrößen bereitgestellt. In der Kassette bzw. den Fäkalientank 15 befindet sich ein Füllstandssensor 32, der beispielsweise als Radarsensor oder dergleichen ausgeführt ist. Hat der Fäkalientank die maximale Füllhöhe H3 erreicht, wird dieser Zustand über die Schnittstelle 38 an die Steuereinheit 30 übermittelt. Die Steuereinheit 30 ist derart programmiert, dass sie einen letzten Notspülvorgang zulässt, der oberhalb des verschlossenen Durchleitteilverschlusses 5 gelagert werden kann. Auf diese Weise wird ein Überlaufen des Fäkalientanks 15 verhindert und beim Auszug des Fäkalientanks 15 fällt kein Abwasser 19 unkontrolliert in den Kassettenschacht 14 oder das Fahrzeug.

Um sicherzustellen, dass der Durchleitteilverschluss 5 tatsächlich manuell oder automatisch verschlossen wurde, wird ferner ein Sensor 33 bereitgestellt, der die Position des Durchleitteilverschlusses detektiert. Sind die Zustände "maximale Füllhöhe H3" und Durchleitteilverschluss verschlossen d.h. in "Schließstellung SS" gleichzeitig erfüllt, wird die Notspülung über die Steuereinheit 30 freigegeben. Die freigegebene Notspülung wird durch einen Nutzer im Bedarfsfall über die Betätigungsvorrichtung, wie beispielsweise ein Bedienpanel 36, ausgelöst. Die ausgelöste Notspülung wird durch Ansteuerung der Pumpe 27 und des zugehörigen Ventils 25 ausgeführt.

Optional kann ein weiterer Sensor 34 im unteren Bereich der Toilettenschüssel vorgesehen werden, der indirekt die Toilettennutzung detektieren kann. Der Sensor 34 dient dabei der Feststellung von Veränderungen der Temperatur, des pH- Werts oder dergleichen nach einem Toilettengang.

Um einer unsachgemäßen Benutzung der Toilette durch den Nutzer vorzubeugen, wird eine maximale Flüssigkeitsmenge in der Steuerelektronik vordefiniert. In Fig. 6 ist als maximal zulässige Spülflüssigkeitshöhe H2 gezeigt. Diese maximale Spülflüssigkeitshöhe wird durch eine Autostoppspülfunktion, die die maximale Öffnungsdauer des Spülventiles 25 begrenzt, gewährleistet. Auf diese Weise wird eine Verschmutzung der Spüldüse 29 und ein Überlaufen der Toilettenschüssel 7 verhindert.

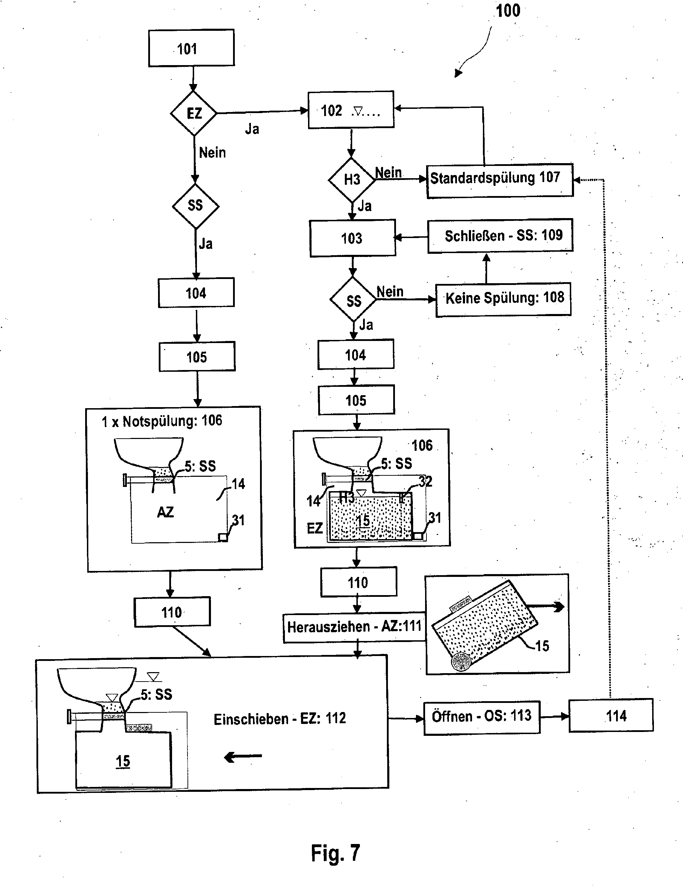

Das Fließdiagramm in Fig. 7 zeigt schematisch Verfahrensschritte des erfindungsgemäßen Verfahrens 100. Der erste Verfahrensschritt 101 umfasst das Erfassen einer Zustandsgröße insbesondere der Fäkalientankposition. Allerdings ist dieser gewählte Beginn und gezeigte Schrittabfolge nicht zwingend notwendig. Der Beginn kann vielmehr bei jedem einzelnen Schritt liegen, je nachdem, in welchem Ausgangszustand sich die Toilette befindet.

Nach dem erfindungsgemäßen Verfahren zum Betrieb einer Toilette 1 erfolgt in einem ersten Schritt das Erfassen 101 der Position des Fäkalientanks mittels eines geeigneten Sensors 31. Als nächster Schritt wird von der Steuereinheit 30 abgefragt, ob der eingeschobene Zustand EZ vorliegt. Ist der Fäkalientank 15 entfernt worden, wird das Signal "Fäkalientank nicht im eingeschobenen Zustand" an die Steuereinheit 30 gesendet. Bei einer mechanischen Kopplung des Fäkalientanks 15 mit dem Durchleitteilverschluss 5 ist der ausgezogene Zustand automatisch mit der Schließstellung SS des Durchleitteilverschlusses 5 verbunden. So kann als nächster Schritt 104 eine Notspülung freigegeben werden. Daraufhin folgt der Verfahrensschritt 105, der eine Auslösung einer Spülung beinhaltet. Dies kann entweder durch den Nutzer direkt über eine Betätigungsvorrichtung oder indirekt über eine weitere Sensorerfassung erfolgen.

Nach der Auslösung wird einmalig die Notspülung im Verfahrensschritt 106 ausgeführt. Auf diese Weise können in der Toilettenschüssel 7 Exkremente oder Flüssigkeiten hygienischer gelagert werden und Verschmutzungen vermieden werden. Um ein Überlaufen der Toilettenschüssel 7 zu verhindern, wird im weiteren Schritt 110 die Spülung deaktiviert. Als nächster Verfahrensschritt 111 kann ein leerer und gereinigter Fäkalientank 15 wieder eingeschoben werden, so dass der eingeschobene Zustand EZ erreicht wird. Danach wird im Verfahrensschritt 112 der Durchleitteilverschluss 5 geöffnet und in die offene Stellung OS überführt, so dass das Abwasser wie gewohnt in den Fäkalientank 15 abgeführt werden kann.

Um das bei der Notspülung zwischengelagerte Abwasser besser und sauberer ableiten zu können, kann nach dem Öffnen 113 des Durchleitteilverschlusses 5 im Schritt 114 automatisch eine Standardspülung, also ohne manuelle Auslösung des Nutzers, ausgeführt werden. Auf diese Weise können mögliche Verunreinigungen effektiver entfernt werden. Anschließend kann die Toilette 1 im Normalbetrieb wie gewohnt verwendet werden. Hierzu werden von einem Nutzer bedarfsgemäße Standardspülungen 107 ausgelöst, bis eine maximale Füllhöhe H3 erreicht wird.

Die Füllhöhe wird gemäß Fig. 7 im eingeschobenen Zustand EZ des Fäkalientanks 15 im Verfahrensschritt 102 erfasst. Das Messergebnis des Füllstandssensors 32 wird zur Auswertung an die Steuereinheit 30 gesendet. Ist die maximale Füllhöhe H3 noch nicht erreicht, wird eine Standardspülung 107 zugelassen.

Bei Erfassung der maximalen Füllhöhe H3 wird im Verfahrensschritt 103 mittels eines Sensors 33 geprüft, ob die Schließstellung SS des Durchleitteilverschlusses 5 vorliegt oder nicht. Wird die Schließstellung SS nicht bejaht, wird keine Spülung freigegeben (Verfahrensschritt 108), um ein Überlaufen des Fäkalientanks 15 zu verhindern.

Im Verfahrensschritt 109 wird der Durchleitteilverschluss 5 geschlossen und vorzugsweise in dieser Stellung fixiert, um ein unbeabsichtigtes Öffnen zu vermeiden. Ein erneutes Erfassen der Schließstellung SS im Verfahrensschritt 103 ergibt daraufhin ein positives Abfrageergebnis bezüglich der Schließstellung SS. Daraufhin wird in einem Schritt 104 die Notspülung mittels der Steuereinheit 30 freigegeben. Diese kann durch einen Nutzer oder indirekt durch die Nutzung der Toilettenschüssel 7 bzw. der Toilette 1 ausgelöst werden (Verfahrensschritt 105). Schließlich kann, obwohl der Fäkalientank 15 voll ist, eine einmalige Notspülung in dem Verfahrensschritt 106 ausgeführt werden. Um ein Überlaufen der Toilettenschüssel 7 zu verhindern, werden eine weitere Notspülung 106 und alle anderen Spülfunktionen im Schritt 110 deaktiviert.

Erreicht das Freizeitmobil oder Wasserfahrzeug im Weiteren eine Entleerungsstation, kann der Fäkalientank 15 herausgezogen werden und der ausgezogene Zustand AZ wird erreicht. Nach Entleerung oder nach Austausch der Fäkalientanks 15 mit einem gereinigten und/ oder leeren Fäkalientank 15 kann wieder der Einschub im Verfahrensschritt 111 erfolgen. Nach Öffnen des Durchleitteilverschlusses 5 im Verfahrensschritt 112 fällt die zwischengelagerte Notspülung mit möglichen Feststoffen in den Fäkalientank 15. Wie in der vorangegangenen Verfahrensabfolge kann die Notspülung nach Öffnung 103 des Durchleitteilverschlusses automatisch durch eine Standardspülung im Verfahrensschritt 114 unterstützt werden.

### Bezugszeichen

1 - Toilette
2 - Oberteil
3 - Unterteil
4 - Durchleitteil
5 - Durchleitteilverschluss
6 - Trägerteil
7 - Toilettenschüssel
8 - Toilettenbrille
9 - Toilettendeckel
10 - Gehäuse
11 - Toilettenschüsselauslass
12 - Gewinde
13 - Ringdichtung
14 - Kassettenschacht
15 - Fäkalientank
16 - Rad
17 - Griff
18 - Entleerungsstutzen
19 - Abwasser mit Feststoffen
20 - Einlassöffnung
21 - Einlassabdeckung
22 - Dichtung
23 - Dichtlippe
24 - Dichtlippe
29 - Spüldüse
30 - Steuereinheit
41 - Durchleitteiloberteil
42 - Durchleitteilunterteil
48 - Führung
49 - Schieberschwertgehäuse
50 - Schiebergriff
51 - Schieberschwert
53 - Ringdichtung
57 - freies Ende von Schieberschwertgehäuse
58 - Dichtung
60 - Kassettenadapter
61 - Fußteil
64 - Flansch
65 - Mitnehmer
66 - Haltabschnitt
67 - Rastnase
69 - Abdeckungsführung
70 - Randsteg
71 - Sperrmechanismus

EZ - eingeschobener Zustand
AZ - ausgezogener Zustand
SS - Schließstellung
OS - Offene Stellung

## Patentansprüche

1. Verfahren (100) zur Spülung einer Toilette (1) für Fahrzeuge, insbesondere einer Toilette eines Freizeitmobils, mit einer Toilettenschüssel (7), einer Steuereinheit (30) zur Ansteuerung einer Spülung mit einem Steuerprogramm und einem Durchleitteil (4) zum Ableiten von Abwasser aus der Toilettenschüssel (7) in einen Fäkalientank (15), aufweisend die folgenden Verfahrensschritte:
- Schließen (109) des Durchleitteiles (4) mittels eines Durchleitteilverschlusses (5);
- Bereitstellen einer Notspülfunktion in abhängigkeit einer Zustandsgröße des Fäkalientanks durch das Steuerprogramm; und
- Ausführen einer Notspülung (106) bei einer Spülauslösung (105).

2. Verfahren nach Anspruch 1 , ferner aufweisend den Verfahrensschritt
- automatisches Stoppen der Notspülung (106) mittels einer Zeitsteuerung.

3. Verfahren nach einem der Ansprüche 1 oder 2, ferner aufweisend den Verfahrensschritt
- Deaktivieren (110) der Spülung nach Ausführung einer Notspülung (106).

4. Verfahren nach einem der vorhergehenden Ansprüche,
wobei das Schließen (109) des Durchleitteilverschlusses (5) mit dem Entfernen des Fäkalientanks (15) gekoppelt ist.

5. Verfahren nach einem der vorhergehenden Ansprüche, ferner aufweisend die Verfahrensschritte
- Abfragen von wenigstens einer Zustandsgröße bezüglich des Fäkalientanks (15), insbesondere der Position des Fäkalientanks (15), und/oder bezüglich des Durchleitteilverschlusses (5), insbesondere der Position des Durchleitteilverschlusses (5);
- Bereitstellen der Notspülfunktion durch das Steuerprogramm in Abhängigkeit von der wenigstens einen Zustandsgröße; und
- Ausführen der Notspülung (106), einer Standardspülung (107) oder keiner Spülung (108) in Abhängigkeit von der wenigstens einen Zustandsgröße.

6. Verfahren nach Anspruch 5, ferner aufweisend die Verfahrensschritte
- Erfassen (101) der Zustandsgröße Fäkalientankposition (EZ/AZ) mittels eines Sensors (31);
- Verarbeiten der Zustandsgröße Fäkalientankposition (EZ/AZ) durch die Steuereinheit (30); und
- Freigabe (104) einer Notspülung (106) in Abhängigkeit der Zustandsgröße Fäkalientankposition (EZ/AZ).

7. Verfahren nach Anspruch 5 oder 6, ferner aufweisend die Verfahrensschritte
- Erfassen (102) der Zustandsgröße Füllstandshöhe im Fäkalientank (15) mittels eines Sensors (32);
- Verarbeiten der Zustandsgröße Füllstandshöhe im Fäkalientank (15) durch die Steuereinheit (30); und
- Freigabe (104) einer Notspülung (106) in Abhängigkeit von der Zustandsgröße Füllstandshöhe im Fäkalientank (15).

8. Verfahren nach einem der Ansprüche 5 bis 7, ferner aufweisend die Verfahrensschritte
- Erfassen (103) der Zustandsgröße Position des Durchleitteilverschlusses mittels eines Sensors (33);
- Verarbeiten der Zustandsgröße Position des Durchleitteilverschlusses durch die Steuereinheit (30); und
- Freigabe einer Notspülung (105) in Abhängigkeit der Zustandsgröße Position des Durchleitteilverschlusses.

9. Verfahren nach einem der vorhergehenden Ansprüche,
wobei die Auslösung der Notspülung (105) über eine Betätigungsvorrichtung durch einen Nutzer erfolgt.

10. Verfahren nach einem der Ansprüche 1 bis 8,
wobei die Auslösung der Notspülung (105) sensorgestützt über die direkte und/oder indirekte Erfassung eines Nutzers mittels eines Sensor erfolgt.

11. Verfahren nach einem der vorhergehenden Ansprüche, ferner aufweisend die Verfahrensschritte
- Einschieben (112) des Fäkalientanks (15) nach Ausführung der Notspülung (106);
- Öffnen (113) des Durchleitteilverschlusses (5) und Ablassen des Abwassers (19) in den Fäkalientank (15); und
- Ausführen einer Standardspülung (114).

12. Toilettensystem für Fahrzeuge zur Durchführung des Verfahrens nach einem der Ansprüche 1 bis 11 mit einer Toilette mit einer Toilettenschüssel (7), einer programmierbaren Steuereinheit (30) zur Ansteuerung einer Spülung mit einem Steuerprogramm, einem Spülventil (25) zur Spülung der Toilettenschüssel (7) mit Spülflüssigkeit und einem Durchleitteil (4) zum Ableiten von Abwasser aus der Toilettenschüssel in einen Fäkalientank (15) wobei das Durchleitteil (4) mittels eines Durchleitteilverschlusses (5) verschließbar ist und bei einer Spülauslösung (105) eine Notspülung (106) durch die Steuereinheit (30) ansteuerbar ist.

13. Toilettensystem nach Anspruch 12, wobei das Toilettensystem zur Ansteuerung der Notspülung (106) wenigstens einen Sensor aufweist, wobei der Sensor ausgewählt ist aus der Gruppe von Positionsdetektor (31, 33), Füllstandssensor (32), Mikroschalter (31) und Eigenschaftssensor (34).

14. Toilettensystem nach Anspruch 12 oder 13,
wobei die Steuereinheit (30) eine Speichereinheit (40) zur Hinterlegung von wenigstens einem Spülprogramm umfasst.

15. Toilettensystem nach einem der Ansprüche 12 bis 14,
wobei die Steuereinheit (30) eine Schnittstelle zur Programmierung (39) und/oder zur Kommunikation (38) mit Sensoren (31, 32, 33) aufweist.

16. Computerprogrammprodukt, das in einer Speichereinheit (40) der Steuereinheit (30) ladbar ist, um Schritte des Verfahrens (100) nach einem der Ansprüche 1 bis 11 auszuführen.

17. Fahrzeug, insbesondere Freizeitmobil oder Wasserfahrzeug, mit einem Toilettensystem nach einem der Ansprüche 12 bis 15.

## Claims

1. A method (100) of flushing a toilet (1) for vehicles, particularly a toilet of a recreational vehicle, including a toilet bowl (7), a control unit (30) for controlling a flush with a control program and a transfer portion (4) for discharging effluent from the toilet bowl (7) into an excrement tank (15), including the following method steps:
- closing (109) the transfer portion (4) by means of a transfer valve (5);
- providing an emergency flushing function in dependence on a condition variable of the excrement tank by the control program; and
- performing an emergency flush (106) when a flush is initiated (105).

2. A method as claimed in Claim 1 further including the method step
- automatically stopping the emergency flush (106) by means of a time controller.

3. A method as claimed in one of Claims 1 or 2 further including the method step
- deactivating (110) the flushing after performing an emergency flush (106).

4. A method as claimed in one of the preceding claims, wherein the closing (109) of the transfer valve (5) is coupled to the removal of the excrement tank (15).

5. A method as claimed in one of the preceding claims, further including the method steps
- monitoring at least one condition variable relating to the excrement tank (15), particularly the position of the excrement tank (15), and/or relating to the transfer valve (5), particularly the position of the transfer valve (5);
- providing the emergency flushing function by the control program in dependence on the at least one condition variable; and
- performing the emergency flush (106), a standard flush (107) or no flush (108) in dependence on the at least one condition variable.

6. A method as claimed in Claim 5, further including the method steps
- determining (101) the condition variable of the excrement tank position (EZ/AZ) by means of a sensor (31);
- processing the condition variable of the excrement tank position (EZ/AZ) by the control unit (30); and
- enabling (104) an emergency flush (106) in dependence on the condition variable of the excrement tank position (EZ/AZ).

7. A method as claimed in Claim 5 or 6, further including the method steps
- determining (102) the condition variable of the filling level of the excrement tank (15) by means of a sensor (32);
- processing the condition variable of the filling level in the excrement tank (15) by the control unit (30); and
- enabling (104) an emergency flush (106) in dependence on the condition variable of the filling level in the excrement tank (15).

8. A method as claimed in one of Claims 5 to 7, further including the method steps
- determining (103) the condition variable of the position of the transfer valve by means of a sensor (33);
- processing the condition variable of the position of the transfer valve by the control unit (30); and
- enabling an emergency flush (105) in dependence on the condition variable of the position of the transfer valve.

9. A method as claimed in one of the preceding claims, wherein the initiation of the emergency flush (105) is effected by a user by means of an actuating device.

10. A method as claimed in one of Claims 1 to 8, wherein the initiation of the emergency flush is effected in a sensor-based manner by the direct and/or indirect detection of a user by means of a sensor.

11. A method as claimed in one of the preceding claims, further including the method steps
- inserting (112) the excrement tank (15) after performing the emergency flush (106);
- opening (113) the transfer valve (5) and draining the effluent (19) into the excrement tank (15); and
- performing a standard flush (114).

12. A toilet system for vehicles for performing the method as claimed in one of Claims 1 to 11 with a toilet with a toilet bowl (7), a programmable control unit (30) for controlling a flush with a control program, a flushing valve (25) for flushing the toilet bowl (7) with flushing liquid and a transfer portion (4) for conducting effluent out of the toilet bowl into an excrement tank (15), wherein the transfer portion (4) is closable by means of a transfer valve (5) and when a flush is initiated (105) an emergency flush (106) may be initiated by the control unit (30).

13. A toilet system as claimed in Claim 12, wherein the toilet system for initiating the emergency flush (106) includes at least one sensor, wherein the sensor is selected from the group comprising a position detector (31, 33), filling level sensor (32), microswitch (31) and property sensor (34).

14. A toilet system as claimed in Claim 12 or 13, wherein the control unit (30) includes a storage unit (40) for storage of at least one flushing program.

15. A toilet system as claimed one of Claims 12 to 14, wherein the control unit (30) includes an interface for programming (39) and/or for communication (38) with sensors (31, 32, 33).

16. A computer program product which is loadable into a storage unit (40) of the control unit (30) in order to perform steps of the method (100) as claimed in one of Claims 1 to 11.

17. A vehicle, particularly a recreational vehicle or water vehicle, with a toilet system as claimed in one of Claims 12 to 15.

## Revendications

1. Procédé (100) de rinçage de toilettes (1) pour des véhicules, en particulier de toilettes d'un véhicule mobile de loisirs, avec une cuvette de toilettes (7), une unité de commande (30) pour la commande d'un rinçage avec un programme de commande et une partie de passage (4) pour l'évacuation d'eaux usées de la cuvette de toilettes (7) dans un réservoir pour matières fécales (15), présentant les étapes de procédé suivantes :
- la fermeture (109) de la partie de passage (4) à l'aide d'une fermeture de partie de passage (5) ;
- la mise à disposition d'une fonction de rinçage d'urgence en fonction d'une grandeur d'état du réservoir pour matières fécales par le programme de commande ; et
- la réalisation d'un rinçage d'urgence (106) lors d'un déclenchement de rinçage (105).

2. Procédé selon la revendication 1, présentant de plus l'étape de procédé suivante
- l'arrêt automatique du rinçage d'urgence (106) à l'aide d'une commande temporelle.

3. Procédé selon l'une quelconque des revendications 1 ou 2, présentant de plus l'étape de procédé suivante
- la désactivation (110) du rinçage après la réalisation d'un rinçage d'urgence (106).

4. Procédé selon l'une quelconque des revendications précédentes,
la fermeture (109) de la fermeture de partie de passage (5) étant couplée au retrait du réservoir pour matières fécales (15).

5. Procédé selon l'une quelconque des revendications précédentes, présentant de plus les étapes de procédé suivantes
- l'interrogation d'au moins une grandeur d'état relative au réservoir pour matières fécales (15), en particulier à la position du réservoir pour matières fécales (15) et/ou relative à la fermeture de partie de passage (5), en particulier à la position de la fermeture de partie de passage (5) ;
- la mise à disposition de la fonction de rinçage d'urgence par le programme de commande en fonction de l'au moins une grandeur d'état ; et
- la réalisation du rinçage d'urgence (106), d'un rinçage standard (107) ou d'aucun rinçage (108) en fonction de l'au moins une grandeur d'état.

6. Procédé selon la revendication 5, présentant de plus les étapes de procédé suivantes
- la détection (101) de la grandeur d'état position du réservoir pour matières fécales (EZ/AZ) à l'aide d'un capteur (31) ;
- le traitement de la grandeur d'état position du réservoir pour matières fécales (EZ/AZ) par l'unité de commande (30) ; et
- la libération (104) d'un rinçage d'urgence (106) en fonction de la grandeur d'état position du réservoir pour matières fécales (EZ/AZ).

7. Procédé selon la revendication 5 ou 6, présentant de plus les étapes de procédé suivantes
- la détection (102) de la grandeur d'état hauteur de remplissage dans le réservoir pour matières fécales (15) à l'aide d'un capteur (32) ;
- le traitement de la grandeur d'état hauteur de remplissage dans le réservoir pour matières fécales (15) par l'unité de commande (30) ; et
- la libération (104) d'un rinçage d'urgence (106) en fonction de la grandeur d'état hauteur de remplissage dans le réservoir pour matières fécales (15).

8. Procédé selon l'une quelconque des revendications 5 à 7, présentant de plus les étapes de procédé suivantes
- la détection (103) de la grandeur d'état position de la fermeture de partie de passage à l'aide d'un capteur (33) ;
- le traitement de la grandeur d'état position de la fermeture de partie de passage par l'unité de commande (30) ; et
- la libération d'un rinçage d'urgence (105) en fonction de la grandeur d'état position de la fermeture de partie de passage.

9. Procédé selon l'une quelconque des revendications précédentes,
le déclenchement du rinçage d'urgence (105) étant effectué par le biais d'un dispositif d'actionnement par un utilisateur.

10. Procédé selon l'une quelconque des revendications 1 à 8,
le déclenchement du rinçage d'urgence (105) étant effectué avec assistance par capteur par le biais de la détection directe et/ou indirecte d'un utilisateur à l'aide d'un capteur.

11. Procédé selon l'une quelconque des revendications précédentes, présentant de plus les étapes de procédé suivantes
- l'insertion (112) du réservoir pour matières fécales (15) après réalisation du rinçage d'urgence (106) ;
- l'ouverture (113) de la fermeture de partie de passage (5) et l'évacuation des eaux usées (19) dans le réservoir pour matières fécales (15) ; et
- la réalisation d'un rinçage standard (114).

12. Système de toilettes pour des véhicules pour la réalisation du procédé selon l'une quelconque des revendications 1 à 11, présentant des toilettes avec une cuvette de toilettes (7), une unité de commande (30) programmable pour la commande d'un rinçage avec un programme de commande, une soupape de rinçage (25) pour le rinçage de la cuvette de toilettes (7) avec du liquide de rinçage et une partie de passage (4) pour l'évacuation d'eaux usées de la cuvette de toilettes dans un réservoir pour matières fécales (15), la partie de passage (4) pouvant être fermée à l'aide d'une fermeture de partie de passage (5) et, lors d'un déclenchement de rinçage (105), un rinçage d'urgence (106) étant commandé par l'unité de commande (30).

13. Système de toilettes selon la revendication 12, le système de toilettes présentant pour la commande du rinçage d'urgence (106) au moins un capteur, le capteur étant sélectionné dans le groupe de détecteurs de position (31, 33), capteurs de remplissage (32), microcommutateurs (31) et capteurs de propriété (34).

14. Système de toilettes selon la revendication 12 ou 13,
l'unité de commande (30) comprenant une unité de mémorisation (40) pour l'enregistrement d'au moins un programme de rinçage.

15. Système de toilettes selon l'une quelconque des revendications 12 à 14,
l'unité de commande (30) présentant une interface pour la programmation (39) et/ou pour la communication (38) avec des capteurs (31, 32, 33).

16. Produit de programme informatique qui peut être chargé dans une unité de mémorisation (40) de l'unité de commande (30) afin de réaliser des étapes du procédé (100) selon l'une quelconque des revendications 1 à 11.

17. Véhicule, en particulier véhicule mobile de loisirs ou bateau, avec un système de toilettes selon l'une quelconque des revendications 12 à 15.
